# EUROPÄISCHE PATENTANMELDUNG

(11) **EP 1 739 324 A1**
(43) Veröffentlichungstag der Anmeldung: **03.01.2007**
(21) Anmeldenummer: 06012199.3
(22) Anmeldetag: 14.06.2006
(51) Int. Cl.: F16F 15/32, F16F 15/34

(54) **Auswuchtgewicht**

(30) Priorität: 01.07.2005 DE 102005030716
(71) Anmelder: Arnold Umformtechnik GmbH & Co. KG, 74670 Forchtenberg-Ernsbach (DE)
(72) Erfinder: Hager, Thomas, 74670 Sindringen (DE); Metzger, Mario, 74670 Sindringen (DE)
(74) Vertreter: Behrendt, Arne

(57) **Zusammenfassung**

Die Erfindung betrifft ein System, bestehend aus einem rotierenden Bauteil (1) und Auswuchtgewichten (3) zum Auswuchten des rotierenden Bauteils (1), wobei das rotierende Bauteil (1) über Bohrungen (2) zur Aufnahme der Auswuchtgewichte (3) verfügt und die Auswuchtgewichte (3) die Form von Bolzen haben, wobei die Bolzen zumindest einen Einführabschnitt (4) und zumindest einen Verbindungsabschnitt (5) aufweisen und wobei der Durchmesser des Verbindungsabschnitts (5) geringfügig größer ist als der Durchmesser des Einführabschnitts (4) und der Innendurchmesser der Bohrungen (2), so dass die Auswuchtgewichte (3) nach Einpressen in die Bohrung (2) in dieser sicher gehalten werden. Die Erfindung ermöglicht ein besonders einfaches Befestigen von Auswuchtgewichten (3) an einem rotierenden Bauteil (1) insbesondere einer Welle oder einem Rotor, wobei das System insbesondere dann vorteilhaft einsetzbar ist, wenn für die Auswuchtgewichte (3) keine Schwermetalle, insbesondere kein Blei verwendet werden soll.

Des Weiteren betrifft die Erfindung Auswuchtgewichte (3) als Komponenten des oben beschriebenen Systems sowie ein Verfahren zum Auswuchten rotierender Bauteile (1) mit Hilfe dieses Systems.

## Beschreibung

Die Erfindung betrifft ein System, bestehend aus einem rotierenden Bauteil und Auswuchtgewichten zum Auswuchten des rotierenden Bauteils. Des Weiteren betrifft die Erfindung die Auswuchtgewichte selbst als Komponenten des genannten Systems sowie ein Verfahren zum Auswuchten rotierender Bauteile, insbesondere Wellen und Rotoren.

Bei rotierenden Bauteilen, insbesondere Wellen und Rotoren oder auch Rädern von Kraftfahrzeugen, ist es von großer Bedeutung, dass keine Unwuchten auftreten, da anderenfalls ein unrunder Lauf, Vibrationen und daraus folgend auch ein erhöhter Verschleiß auftreten. Aus diesem Grund geht man üblicherweise so vor, dass man zunächst das Bauteil kurz rotieren lässt, um festzustellen, an welcher Stelle sich eine Unwucht befindet, und anschließend Auswuchtgewichte so an dem Bauteil befestigt, dass die Unwucht ausgeglichen wird. Nach Befestigung des Auswuchtgewichtes lässt man das Bauteil in der Regel erneut rotieren, um idealerweise festzustellen, dass sämtliche Unwuchten beseitigt wurden. Anderenfalls wird der Vorgang wiederholt, indem weitere Auswuchtgewichte angebracht werden.

Bislang wurden in der Industrie zum Wuchten rotierender Bauteile fast ausschließlich Schwermetalle mit hoher Dichte und geringer Festigkeit verwendet. Dies hat den Vorteil, dass eine große Masse mit verhältnismäßig geringem Volumen zur Verfügung steht und darüber hinaus das Anbringen der Auswuchtgewichte aufgrund der Weichheit des Materials mit geringem technischen Aufwand erfolgen kann. Besonders häufig wird als Schwermetall zum Auswuchten Blei verwendet, dass problemlos vernietet oder verstemmt werden kann.

Die Verwendung von Schwermetallen, insbesondere Blei, wird jedoch aus umwelt- und gesundheitspolitischen Gründen immer häufiger kritisiert, da die Belastung der Umwelt mit Schwermetallen grundsätzlich unerwünscht ist. Aus diesem Grund wäre es wünschenswert, Auswuchtgewichte verwenden zu können, die aus unproblematischeren Materialien gefertigt sind. Derartige Metalle, bspw. Stahl, sind jedoch erheblich härter als Blei und daher durch Vernieten oder Verstemmen nicht so einfach an dem rotierenden Bauteil anzubringen.

Angesichts dieser Probleme stellt sich ausgehend vom obigen Stand der Technik die Aufgabe, ein System, bestehend aus einem rotierenden Bauteil und Auswuchtgewichten, zur Verfügung zu stellen, bei dem die Auswuchtgewichte auch dann ohne großen Aufwand am rotierenden Bauteil anbringbar sind, wenn sie nicht aus einem verhältnismäßig weichen Schwermetall, sondern bspw. aus Stahl gefertigt sind.

Die Aufgabe wird erfindungsgemäß gelöst durch ein System, bestehend aus einem rotierenden Bauteil und Auswuchtgewichten zum Auswuchten des rotierenden Bauteils, wobei das rotierende Bauteil über Bohrungen zur Aufnahme der Auswuchtgewichte verfügt und die Auswuchtgewichte die Form von Bolzen haben, die Bolzen zumindest einen Einführabschnitt und zumindest einen Verbindungsabschnitt aufweisen, und wobei der Durchmesser des Verbindungsabschnitts geringfügig größer ist als der Durchmesser des Einführabschnitts und der Innendurchmesser der Bohrungen, so dass die Auswuchtgewichte nach Einpressen in die Bohrung in dieser sicher gehalten werden.

Gemäß der Erfindung weist das rotierende Bauteil mehrere, möglichst eine Vielzahl von Bohrungen auf, in die die Auswuchtgewichte z. B. durch Pressen oder mit Hilfe von schlagenden Werkzeugen eingetrieben werden können. Die Auswuchtgewichte haben die Form eines Bolzens und sind dementsprechend länglich, bspw. zylindrisch, so dass die Auswuchtgewichte entlang ihrer Längsachse in die Bohrungen eingetrieben werden können. Die Bolzen weisen an zumindest einem Ende einen Einführabschnitt auf, der dazu dient, den Bolzen vorzupositionieren und in der Bohrung zu zentrieren, bevor der eigentliche Einpressvorgang erfolgt, sowie mindestens einen Verbindungsabschnitt, dessen Aufgabe es ist, eine sichere Verbindung des Auswuchtgewichts mit der entsprechenden Bohrung im rotierenden Bauteil herzustellen. Hierzu weist der Verbindungsabschnitt einen geringfügig größeren Durchmesser auf, als der Einführabschnitt. Darüber hinaus ist der Durchmesser des Verbindungsabschnitts auch geringfügig größer als der Innendurchmesser der Bohrung. Entsprechend ist der Einführabschnitt des Auswuchtgewichts verhältnismäßig einfach in die Bohrung einsteckbar, während der Verbindungsabschnitt erst durch Anwendung eines höheren Maßes an Kraft in die Bohrung eintreibbar ist, wobei das Anwenden dieser Kraft etwa durch Verwendung eines Hammers oder auch maschinell erfolgen kann.

Durch das Einpressen des Auswuchtgewichts mit seinem Verbindungsabschnitt in die Bohrung wird das Auswuchtgewicht zumindest kraftschlüssig in der Bohrung fixiert, in dem das Auswuchtgewicht letztlich in der Bohrung verklemmt wird. Beim Eintreiben des Auswuchtgewichtes tritt eine elastische Verformung des Verbindungsabschnitts und/oder der Innenwandung der Bohrung auf, so dass ein fester Sitz des Auswuchtgewichts in der Bohrung entsteht, der es nur bei erheblicher Kraftaufwendung möglicht macht, den Bolzen wieder aus der Bohrung hinauszutreiben. Im normalen Betrieb des rotierenden Bauteils wird entsprechend das Auswuchtgewicht in der Bohrung sicher gehalten.

Neben der elastischen Verformung der aufeinandertreffenden Metalloberflächen kann auch eine plastische Verformung auftreten, die nicht mehr ohne weiteres reversibel ist. Hierbei kann etwa Material der Innenwandung der Bohrung vom Verbindungsabschnitt des eingetriebenen Bolzens so zur Seite gedrückt werden, dass sich eine Wulst ausbildet, die den Verbindungsabschnitt hintergreift. Auf diese Weise wird nicht nur eine kraftschlüssige, sondern auch eine quasi-formschlüssige Verbindung generiert. Gewissermaßen erzeugt somit der elastische Anteil der Verformung eine kraftschlüssige, klemmende Verbindung, während der plastische Anteil der Verformung für eine quasi-formschlüssige Verbindung verantwortlich ist.

In der Regel wird der als Auswuchtgewicht dienende Bolzen mit seiner gesamten Länge in die Bohrung in dem rotierenden Bauteil eingetrieben. Denkbar ist jedoch auch, den Bolzen lediglich teilweise einzupressen, wobei jedoch stets wichtig ist, dass zumindest der Verbindungsabschnitt innerhalb der Bohrung liegt, um einen festen Sitz zu gewährleisten. Ein lediglich teilweises Eintreiben des Auswuchtgewichts kann u. U. sinnvoll sein, wenn das Auswuchtgewicht ggf. wieder entfernt werden soll.

Üblicherweise steht der Verbindungsabschnitt über seinen gesamten Umfang ringförmig über den Einführabschnitt hinaus, grundsätzlich wäre es jedoch auch denkbar, den Verbindungsabschnitt so auszubilden, dass er entlang seines über den Einführabschnitt hinausragenden Umfangs auch Unterbrechungen aufweist.

Sinnvollerweise sind die Bohrungen entlang des Umfangs des rotierenden Bauteils angeordnet. Aufgrund der verhältnismäßig großen Entfernung der entlang des äußeren Umfangs angebrachten Bohrungen von der Achse, um die das Bauteil rotiert, können entsprechend kleinere Gewichte verwendet werden, um beim Ausgleichen der Unwucht den gleichen Effekt zu erzielen. Sinnvollerweise ist entlang des Umfangs eine Reihe von Bohrungen vorgesehen, die eng benachbart nebeneinander angebracht sind, so dass an nahezu beliebiger Stelle die Auswuchtgewichte eingetrieben werden können und somit jede beliebige Unwucht eliminiert werden kann. Bei dem rotierenden Bauteil handelt es sich zumeist um eine Welle oder einen Rotor.

Um verschiedene Unwuchten ausgleichen zu können, können Auswuchtgewichte mit verschiedenen Massen vorrätig gehalten werden. Die Variation der Massen kann zum einen über das verwendete Material erfolgen und zum anderen über die genaue Form des Auswuchtgewichts, etwa in dem den Einführabschnitten des Bolzens, die nicht unmittelbar für die Fixierung des Bolzens in der Bohrung verantwortlich sind, unterschiedliche Formen gegeben werden. So können die Auswuchtgewichte, insbesondere deren Einführabschnitte, unterschiedliche Durchmesser, Längen etc. aufweisen. Darüber hinaus kann auch das Material im Bereich der Einführabschnitte variieren, um Auswuchtgewichte mit unterschiedlichen Massen zur Verfügung zu stellen. Anstatt viele verschiedene Auswuchtgewichte vorzusehen, die unterschiedliche Massen haben, ist es jedoch auch möglich, lediglich Auswuchtgewichte mit einer, verhältnismäßig kleinen Masse zu verwenden, was jedoch u. U. die Verwendung mehrerer Auswuchtgewichte auf einer Seite des rotierenden Bauteils nötig macht.

Vorzugsweise sind die Auswuchtgewichte längssymmetrisch und weisen an beiden Längsenden jeweils einen Einführabschnitt auf. Dies hat den Vorteil, dass das Auswuchtgewicht vor dem Einpressen in die Bohrung nicht in einer Zuführung orientiert werden muss; vielmehr ist es gleichgültig, in welcher Richtung das Auswuchtgewicht in die Bohrung eingetrieben wird.

Darüber hinaus weist das Auswuchtgewicht in der Regel lediglich einen Verbindungsabschnitt auf, der sich in Längsrichtung gesehen in der Mitte des Auswuchtgewichts befindet. Vorzugsweise hat das Auswuchtgewicht dementsprechend einen Verbindungsabschnitt in der Mitte, an den zu beiden Seiten ein identischer Einführabschnitt angrenzt. Ein Verbindungsabschnitt ist normalerweise ausreichend, um die sichere Fixierung des Auswuchtgewichts in der Bohrung sicherzustellen, grundsätzlich wäre es selbstverständlich auch möglich, mehrere Verbindungsabschnitte an dem Auswuchtgewicht vorzusehen, was jedoch das Eintreiben des Auswuchtgewichtes in die Bohrung erschweren würde.

Der Teil des Verbindungsabschnitts, der aufgrund des größeren Durchmessers des Verbindungsabschnitts über den Einführabschnitt hinausragt, kann unterschiedliche Formen aufweisen. Beispielsweise kann dieser Teil im Längsschnitt betrachtet trapezförmig, kegelig oder dreieckig sein, wobei ein Dreckeck im Längsschnitt symmetrisch oder auch unsymmetrisch sein kann. In letzterem Fall ist allerdings der Bolzen nur in eine Richtung gut in die Bohrung eintreibbar. Möglich ist es auch, den Verbindungsabschnitt abgerundet, d. h. als Wölbung auszubilden.

Eine weitere Alternative besteht darin, einen gerändelten Verbindungsabschnitt zu verwenden, d. h. einen Verbindungsabschnitt, der eine Oberfläche ähnlich der einer Rändelschraube hat mit einer Vielzahl, kleiner wabenartiger Vertiefungen. Ebenso ist es möglich, einen Verbindungsabschnitt mit mehreren ringförmig über die Einführabschnitte hervorstehenden Bereichen vorzusehen, wobei die einzelnen Ringe unmittelbar aneinandergrenzen, so dass insgesamt der Verbindungsabschnitt mehrere Erhöhungen und dazwischen liegende Vertiefungen aufweist. An der Stelle einer solchen Vertiefung kann der Verbindungsabschnitt demzufolge den gleichen Durchmesser aufweisen wie ein Einführabschnitt. Die Verwendung eines solchen Verbindungsabschnitts, der neben den Erhöhungen auch Vertiefungen aufweist kann, ebenso wie die Verwendung eines gerändelten Verbindungsabschnitts, es ermöglichen, dass Material der Innenwandung der Bohrung, in die das Auswuchtgewicht eingetrieben wird, welches vom Verbindungsabschnitt verdrängt wird, in die Bereiche dieser Vertiefungen ausweicht. Auf diese Weise wird die oben erwähnte, quasi-formschlüssige Verbindung erzielt.

Während in aller Regel die Bohrung selbst einen runden Querschnitt aufweist, können die Auswuchtgewichte unterschiedliche Querschnitte haben. So ist die Verwendung von Auswuchtgewichten mit rundem Querschnitt ebenso möglich, wie die Verwendung von Auswuchtgewichten mit einem polygonalen Querschnitt, wobei jedoch das Polygon insbesondere an den Ecken abgerundet ist. Selbstverständlich müssen der Querschnitt der Auswuchtgewichte und der Querschnitt der Bohrungen so aufeinander abgestimmt sein, dass einerseits das Eintreiben des Auswuchtgewichtes in die Bohrung möglich bleibt, andererseits jedoch das Auswuchtgewicht sicher in der Bohrung gehalten wird.

Besonders bevorzugt ist die Verwendung eines Auswuchtgewichtes, bei der der Querschnitt ein in den Ecken und an den Seiten abgerundetes Dreieck ausbildet. Im Vergleich zur runden Ausführung erfolgt auf diese Weise ein besserer Toleranzausgleich zwischen Auswuchtgewicht und Bohrung. Ein Vorteil gegenüber einem kreisrunden Bolzen ist, dass auf diese Weise seitliche Freiräume zwischen Innenwandung der Bohrung und Bolzen geschaffen werden, in die vom Verbindungsabschnitt verdrängtes Material der Innenwandung der Bohrung ausweichen kann. Die plastische Verformung der Innenwandung der Bohrung erfolgt somit in der Weise, dass die breitesten Stellen des im Querschnitt ein abgerundetes Dreieck darstellenden Auswuchtgewichts Material der Innenwandung der Bohrung an schmalere Stellen verdrängen. Darüber hinaus kann ein Querschnitt in Form eines abgerundeten Dreiecks bewirken, dass beim noch vergleichsweise lockeren Vorpositionieren und Zentrieren des Auswuchtgewichts durch Einführen des Einführabschnittes in die Bohrung bereits eine Verdrehsicherheit erzeugt wird. In der Regel stimmt der Querschnitt des Einführabschnitts mit dem Querschnitt des Verbindungsabschnitts hinsichtlich der Form überein, wobei allerdings der Verbindungsabschnitt, wie oben ausgeführt, einen geringfügig größeren Durchmesser hat.

Die Verwendung eines Auswuchtgewichtes mit Polygon-Querschnitt hat gegenüber der Verwendung eines Auswuchtgewichtes mit kreisrundem Querschnitt auch noch den Vorteil der besseren Eintreibbarkeit in die Bohrung. So wird eine Kraft auf die Innenwandung der Bohrung nicht entlang Ihres gesamten Umfangs ausgeübt, was das Eintreiben des Auswuchtgewichtes u. U. deutlich erschwert, sondern beispielsweise bei einem Dreieck-Polygon lediglich entlang dreier Linien. Insbesondere dann, wenn auch eine plastische Verformung des Materials der Bohrung angestrebt ist, muss entsprechend nur an wenigen Stellen der Innenwandung der Bohrung eine solche Verformung stattfinden und Material verdrängt werden. Je nach Material des rotierenden Bauteils, in das die Auswuchtgewichte eingebracht werden, können dabei auch Auswuchtgewichte polygonalen Querschnitts mit unterschiedlich stark ausgeprägten Rundungen zum Einsatz kommen, um einen guten Kompromiss zwischen Eintreibbarkeit des Auswuchtgewichtes in die Bohrung und Haltung des Auswuchtgewichtes in der Bohrung zu gewährleisten. Grundsätzlich ist dabei bei weicherem Material eine etwas rundere Form mit entsprechend größerer Kontaktfläche zwischen Bohrung und Auswuchtgewicht tolerabel.

Um das Einführen des Auswuchtgewichts in die Bohrung weiter zu erleichtern, können die Längsenden, d. h. die Einführabschnitte, angefast oder abgerundet sein, was insbesondere die Vorpositionierung vereinfacht. Eine weitere Vereinfachung kann dadurch erzielt werden, dass die Längsenden der Auswuchtgewichte mit einer kegelförmig oder pyramidal zulaufenden Spitze versehen werden. Diese zusätzlichen Maßnahmen können sowohl an einem oder auch an beiden Enden des Bolzens ergriffen werden.

Die Bohrungen innerhalb des rotierenden Bauteils sind häufig leicht konisch. Dies bewirkt, dass beim Einführen des Auswuchtgewichts an der Seite der Bohrung mit größerem Querschnitt die Vorpositionierung einfach möglich ist, dass Auswuchtgewicht jedoch beim Eintreiben in die Bohrung immer stärker in dieser verklemmt wird, da der Querschnitt der Bohrung mit zunehmender Tiefe immer weiter abnimmt. Auf diese Weise wird der Sitz des Auswuchtgewichts in der Bohrung weiter verbessert. Gegebenenfalls kann auch das Auswuchtgewicht selbst in Längsrichtung leicht konisch ausgebildet sein, was jedoch bedeutet, dass sich das Auswuchtgewicht letztlich nur in einer Richtung in die Bohrung eintreiben lässt.

Da das erfindungsgemäße System letztlich gerade auch der Vermeidung der Verwendung von Schwermetallen wie Blei dient, ist es bevorzugt, die Auswuchtgewichte aus anderen Metallen, wie z. B. Stahl, Aluminium oder Messing zu fertigen. Diese Materialien sind ökologisch und gesundheitlich unproblematisch. Selbstverständlich ist auch die Verwendung von Legierungen dieser Metalle oder die Verwendung anderer Metalle möglich, wobei die Wahl des Metalls darüber hinaus für die Einstellung der Masse des Auswuchtgewichts von Bedeutung ist, da bspw. Stahl erheblich schwerer ist als Aluminium.

Neben dem oben beschriebenen System aus rotierendem Bauteil und Auswuchtgewichten zum Auswuchten des rotierenden Bauteils betrifft die Erfindung auch die Auswuchtgewichte als Komponenten dieses Systems selbst. Diese Auswuchtgewichte sind entsprechend den obigen Ausführungen ausgebildet. Schließlich betrifft die Erfindung auch ein Verfahren zum Auswuchten rotierender Bauteile, insbesondere Wellen und Rotoren, bei dem nach Feststellung einer Unwucht die oben beschriebenen Auswuchtgewichte in innerhalb des rotierenden Bauteils hierfür vorgesehene Bohrungen eingepresst oder eingeschlagen werden, so dass die Auswuchtgewichte in den Bohrungen sicher gehalten werden, wobei das Verfahren solange fortgesetzt wird, bis die Unwucht beseitigt ist. Hierzu lässt man das Bauteil zunächst rotieren, beseitigt, wie oben ausgeführt, die festgestellte Unwucht und überprüft erneut, ob noch eine Unwucht festzustellen ist durch neuerliches Rotieren des Bauteils. Falls bei dieser Überprüfung erneut eine Unwucht auftritt, müssen je nach Verteilung der Unwucht auf den Umfang des rotierenden Bauteils ein oder mehrere Auswuchtgewichte in das Bauteil eingebracht werden, bis schließlich die Unwucht vollständig beseitigt ist.

Die Erfindung wird beispielhaft anhand der beigefügten Figuren näher erläutert.

Es zeigen:
- Fig. 1:: Eine Hälfte eines rotierenden Bauteils als Teil des erfindungsgemäßen Systems im Querschnitt;
- Fig. 2:: ein erfindungsgemäßes Auswuchtgewicht in Längsansicht;
- Fig. 3:: eine erste Ausführungsform des erfindungsgemäßen Auswuchtgewichts in Längsansicht;
- Fig. 4:: eine zweite Ausführungsform des erfindungsgemäßen Auswuchtgewichts in Längsansicht;
- Fig. 5:: eine dritte Ausführungsform des erfindungsgemäßen Auswuchtgewichts in Längsansicht;
- Fig. 6:: eine vierte Ausführungsform des erfindungsgemäßen Auswuchtgewichts in Längsansicht;
- Fig. 7:: eine fünfte Ausführungsform des erfindungsgemäßen Auswuchtgewichts in der Längsansicht;
- Fig. 8-10:: verschiedene mögliche Querschnitte für das Auswuchtgewicht
- Fig. 11-14:: verschiedene Längsenden der Einführabschnitte des erfindungsgemäßen Auswuchtgewichts in Längsansicht.

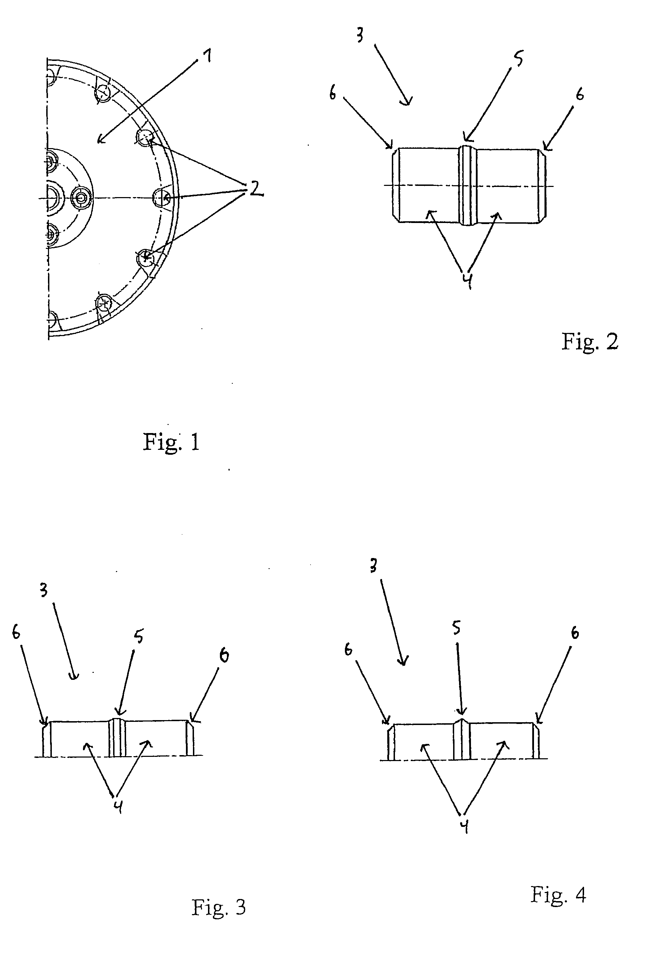

In Figur 1 ist ein rotierendes Bauteil 1 gemäß Erfindung im Querschnitt gezeigt, wobei hier lediglich eine Hälfte des rotierenden Bauteils 1 zu sehen ist. Dieses Bauteil 1 weist entlang seines Umfangs eine Vielzahl von Bohrungen 2 auf, die für die Aufnahme der bolzenförmigen Auswuchtgewichte 3 zur Verfügung stehen. Je nachdem, an welcher Stelle eine Unwucht im rotierenden Bauteil 1 festgestellt wird, müssen in ein oder mehrere der Bohrungen 2 Auswuchtgewichte 3 eingetrieben werden.

In Figur 2 ist ein erfindungsgemäßes Auswuchtgewicht 3 in Längsansicht dargestellt. Dieses ist symmetrisch aufgebaut, wobei sich in der Mitte der Verbindungsabschnitt 5 befindet, der der Verklemmung und somit Fixierung des Auswuchtgewichts 3 innerhalb der Bohrung 2 dient. An beiden Seiten grenzt der Verbindungsabschnitt 5 an Einführabschnitte 4, die der Vorpositionierung des Auswuchtgewichts 3 sowie der Zentrierung in der Bohrung 2 dienen. Dadurch, dass das Auswuchtgewicht 3 längssymmetrisch ist, spielt es keine Rolle, in welcher der beiden Längsrichtungen das Auswuchtgewicht 3 in die Bohrung 2 eingetrieben wird. Darüber hinaus erkennt man an beiden Längsenden der Einführabschnitte 4 jeweils eine Fase 6, die die Vorpositionierung weiter erleichtert.

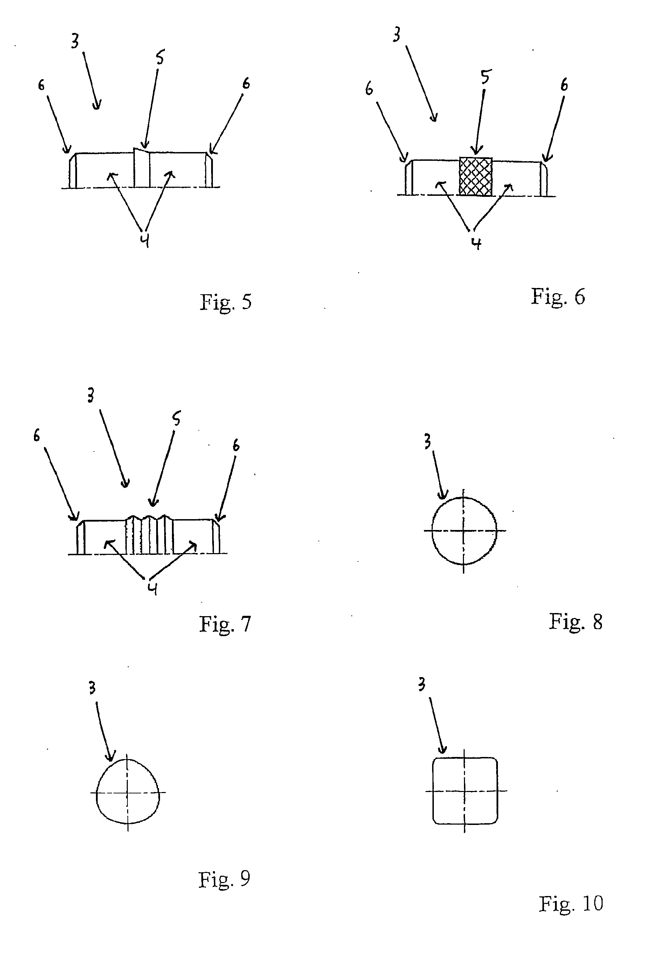

Die Figuren 3 bis 7 zeigen im Längsschnitt unterschiedliche Alternativen für den Verbindungsabschnitt 5 des Auswuchtgewichts 3, wobei jeweils nur die obere Hälfte des Auswuchtgewichts 3 dargestellt ist, während die Längsachse des Auswuchtgewichts 3 durch die untere Linie angedeutet ist. In Figur 3 ist der über die Einführabschnitte 4 hervorstehende Teil des Verbindungsabschnitts 5 in Längsansicht trapezförmig, in den Figuren 4 und 5 hingegen dreieckig, wobei es sich in Figur 4 um ein gleichschenkeliges Dreieck handelt, was bewirkt, dass das Auswuchtgewicht 3 im Ganzen längssymmetrisch bleibt, während in Figur 5 ein ungleichschenkeliges Dreieck dargestellt ist. Entsprechend ist das Auswuchtgewicht 3 aus Figur 5 nicht mehr symmetrisch sondern weist eine bevorzugte Eintreibrichtung auf.

In Figur 6 ist ein Auswuchtgewicht 3 mit Verbindungsabschnitt 5 in gerändelter Form dargestellt, was bedeutet, dass der Verbindungsabschnitt 5 eine Vielzahl kleiner, wabenartiger Vertiefungen aufweist.

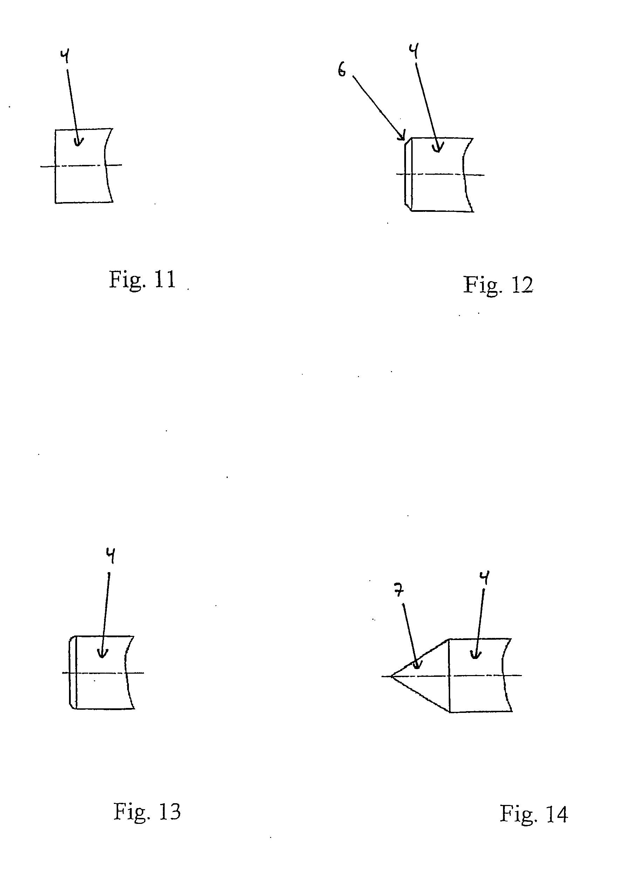

Figur 7 schließlich zeigt, dass der Verbindungsabschnitt 5 mehrere ringförmig über die Einführabschnitte 4 hinaus stehende Bereiche aufweisen kann, in diesem Fall drei. Sowohl bei der Ausführungsform gemäß Figur 6 als auch bei der Ausführungsform gemäß Figur 7 befinden sich innerhalb des Verbindungsabschnitts 5 auch kleinere Vertiefungen, in die ggf. Material der Innenwandung der Bohrung 2, das vom Verbindungsabschnitt 5 beim Eintreiben des Auswuchtgewichts 3 verdrängt wird, in diese Vertiefungen ausweichen kann. Auf diese Weise wird eine quasi-formschlüssige Verbindung von Auswuchtgewicht 3 und Bohrung 2 erzeugt.

Die Figuren 8 bis 10 zeigen im Querschnitt das Auswuchtgewicht 3, dass unterschiedliche Formen aufweisen kann. Während das Auswuchtgewicht 3 gemäß Figur 8 im Querschnitt kreisrund ist, handelt es sich bei den Querschnitten gemäß Figur 9 und 10 um abgerundete Polygone, in Figur 9 um ein abgerundetes Dreieck, in Figur 10 um ein Quadrat mit abgerundeten Ecken. Grundsätzlich sind selbstverständlich auch weitere abgerundete Polygone denkbar.

Die Figuren 11 bis 14 zeigen unterschiedliche Ausführungsformen der Einführabschnitte 4 des Auswuchtgewichtes 3. Im einfachsten Fall, dargestellt in Figur 11, ist das Längsende des Einführabschnitts 4 gerade. In Figur 12 hingegen ist das Längsende des Einführabschnitts 4 angefast und weist dementsprechend eine Fase 6 auf, während der Einführabschnitt 4 gemäß Figur 13 an seinem Längsende leicht abgerundet ist. Figur 14 schließlich zeigt einen Einführabschnitt 4 mit kegelförmiger Spitze 7. Sämtliche in den Figuren 12 bis 14 dargestellten Ausführungsformen der Einführabschnitte 4 dienen dazu, die Vorpositionierung und Zentrierung des Auswuchtgewichts in der Bohrung 2 weiter zu erleichtern.

## Patentansprüche

1. System, bestehend aus einem rotierenden Bauteil (2) und Auswuchtgewichten (3) zum Auswuchten des rotierenden Bauteils (1),
**dadurch gekennzeichnet, dass** das rotierende Bauteil (1) über Bohrungen (2) zur Aufnahme der Auswuchtgewichte (3) verfügt und die Auswuchtgewichte (3) die Form von Bolzen haben, wobei die Bolzen zumindest einen Einführabschnitt (4) und zumindest einen Verbindungsabschnitt (5) aufweisen, und wobei der Durchmesser des Verbindungsabschnitts (5) geringfügig größer ist als der Durchmesser des Einführabschnitts (4) und der Innendurchmesser der Bohrungen (2), so dass die Auswuchtgewichte (3) nach Einpressen in die Bohrung (2) in dieser sicher gehalten werden.

2. System nach Anspruch 1, **dadurch gekennzeichnet, dass** die Bohrungen (2) entlang des Umfangs des rotierenden Bauteils (1) angeordnet sind.

3. System nach Anspruch 1 oder 2, **dadurch gekennzeichnet, dass** das rotierende Bauteil (1) eine Welle oder ein Rotor ist.

4. System nach einem der Ansprüche 1 bis 3, **dadurch gekennzeichnet, dass** die Auswuchtgewichte (3) längssymmetrisch sind und an beiden Längsenden jeweils einen Einführabschnitt (4) aufweisen.

5. System nach einem der Ansprüche 1 bis 4, **dadurch gekennzeichnet, dass** die Auswuchtgewichte (3) einen Verbindungsabschnitt (5) aufweisen, der sich in Längsrichtung in der Mitte des Auswuchtgewichts (3) befindet.

6. System nach einem der Ansprüche 1 bis 5, **dadurch gekennzeichnet, dass** der über die Einführabschnitte (4) hervorstehende Teil des Verbindungsabschnitts (5) im Längsschnitt trapezförmig ist.

7. System nach einem der Ansprüche 1 bis 5, **dadurch gekennzeichnet, dass** der über die Einführabschnitte (4) hervorstehende Teil des Verbindungsabschnitts (5) im Längsschnitt dreieckig ist.

8. System nach einem der Ansprüche 1 bis 5, **dadurch gekennzeichnet, dass** der über die Einführabschnitte (4) hervorstehende Teil des Verbindungsabschnitts (5) im Längsschnitt abgerundet ist.

9. System nach einem der Ansprüche 1 bis 5, **dadurch gekennzeichnet, dass** der über die Einführabschnitte (4) hervorstehende Teil des Verbindungsabschnitts (5) gerändelt ist.

10. System nach einem der Ansprüche 1 bis 9, **dadurch gekennzeichnet, dass** der Verbindungsabschnitt (5) mehrere ringförmig über die Einführabschnitte (4) hervorstehende Bereiche aufweist.

11. System nach einem der Ansprüche 1 bis 10, **dadurch gekennzeichnet, dass** die Auswuchtgewichte (3) einen runden Querschnitt aufweisen.

12. System nach einem der Ansprüche 1 bis 10, **dadurch gekennzeichnet, dass** die Auswuchtgewichte (3) einen polygonalen Querschnitt aufweisen, wobei das Polygon abgerundet ist.

13. System nach Anspruch 12, **dadurch gekennzeichnet, dass** die Auswuchtgewichte (3) im Querschnitt ein abgerundetes Dreieck ausbilden.

14. System nach einem der Ansprüche 1 bis 13, **dadurch gekennzeichnet, dass** eines, vorzugsweise beide Längsenden der Auswuchtgewichte (3) angefast oder abgerundet sind.

15. System nach einem der Ansprüche 1 bis 13, **dadurch gekennzeichnet, dass** eines, vorzugsweise beide Längsenden der Auswuchtgewichte (3) eine kegelförmig oder pyramidal zulaufende Spitze (7) aufweisen.

16. System nach einem der Ansprüche 1 bis 15, **dadurch gekennzeichnet, dass** die Bohrungen (2) im rotierenden Bauteil (1) leicht konisch sind.

17. System nach einem der Ansprüche 1 bis 16, **dadurch gekennzeichnet, dass** die Auswuchtgewichte (3) in Längsrichtung leicht konisch sind.

18. System nach einem der Ansprüche 1 bis 17, **dadurch gekennzeichnet, dass** die Auswuchtgewichte (3) aus Stahl, Aluminium, Messing oder Legierungen dieser Metalle bestehen.

19. Auswuchtgewicht als Komponente eines Systems nach einem der Ansprüche 1 bis 18 zum Einführen in innerhalb eines rotierenden Bauteils hierfür vorgesehene Bohrungen, **dadurch gekennzeichnet, dass** das Auswuchtgewicht (3) die Form eines Bolzens hat, wobei der Bolzen zumindest einen Einführabschnitt (4) und zumindest einen Verbindungsabschnitt (5) aufweist und wobei der Durchmesser des Verbindungsabschnitts (5) geringfügig größer ist als der Durchmesser des Einführabschnitts (4) und der Innendurchmesser der Bohrungen (2), so dass das Auswuchtgewicht (3) nach Einpressen in die Bohrung (2) in dieser sicher gehalten wird.

20. Auswuchtgewicht nach Anspruch 19, **dadurch gekennzeichnet, dass** das Auswuchtgewicht (3) längssymmetrisch ist und an beiden Längsenden jeweils einen Einführabschnitt (4) aufweist.

21. Auswuchtgewicht nach Anspruch 19 oder 20, **dadurch gekennzeichnet, dass** das Auswuchtgewicht (3) einen Verbindungsabschnitt (5) aufweist, der sich in Längsrichtung in der Mitte des Auswuchtgewichts (3) befindet.

22. Auswuchtgewicht nach einem der Ansprüche 19 bis 21, **dadurch gekennzeichnet, dass** der über den Einführabschnitt (4) hervorstehende Teil des Verbindungsabschnitts (5) im Längsschnitt trapezförmig ist.

23. Auswuchtgewicht nach einem der Ansprüche 19 bis 21, **dadurch gekennzeichnet, dass** der über die Einführabschnitte (4) hervorstehende Teil des Verbindungsabschnitts (5) im Längsschnitt dreieckig ist.

24. Auswuchtgewicht nach einem der Ansprüche 19 bis 21, **dadurch gekennzeichnet, dass** der über die Einführabschnitte (4) hervorstehende Teil des Verbindungsabschnitts (5) im Längsschnitt abgerundet ist.

25. Auswuchtgewicht nach einem der Ansprüche 19 bis 21, **dadurch gekennzeichnet, dass** der über die Einführabschnitte (4) hervorstehende Teil des Verbindungsabschnitts (5) gerändelt ist.

26. Auswuchtgewicht nach einem der Ansprüche 19 bis 25, **dadurch gekennzeichnet, dass** der Verbindungsabschnitt (5) mehrere ringförmig über die Einführabschnitte (4) hervorstehende Bereiche aufweist.

27. Auswuchtgewicht nach einem der Ansprüche 19 bis 26, **dadurch gekennzeichnet, dass** das Auswuchtgewicht (3) einen runden Querschnitt aufweist.

28. Auswuchtgewicht nach einem der Ansprüche 19 bis 26, **dadurch gekennzeichnet, dass** das Auswuchtgewicht (3) einen polygonalen Querschnitt aufweist, wobei das Polygon abgerundet ist.

29. Auswuchtgewicht nach Anspruch 28, **dadurch gekennzeichnet, dass** das Auswuchtgewicht (3) im Querschnitt ein abgerundetes Dreieck ausbildet.

30. Auswuchtgewicht nach einem der Ansprüche 19 bis 29, **dadurch gekennzeichnet, dass** eines, vorzugsweise beide Längsenden des Auswuchtgewichts (3) angefast oder abgerundet sind.

31. Auswuchtgewicht nach einem der Ansprüche 19 bis 29, **dadurch gekennzeichnet, dass** eines, vorzugsweise beide Längsenden des Auswuchtgewichts (3) eine kegelförmig oder pyramidal zulaufende Spitze (7) aufweisen.

32. Auswuchtgewicht nach einem der Ansprüche 19 bis 31, **dadurch gekennzeichnet, dass** das Auswuchtgewicht (3) in Längsrichtung leicht konisch ist.

33. Auswuchtgewicht nach einem der Ansprüche 19 bis 32, **dadurch gekennzeichnet, dass** das Auswuchtgewicht (3) aus Stahl, Aluminium, Messing oder einer Legierung dieser Metalle besteht.

34. Verfahren zum Auswuchten rotierender Bauteile (1), insbesondere Wellen und Rotoren, **dadurch gekennzeichnet, dass** nach Feststellung einer Unwucht Auswuchtgewichte (3) nach einem der Ansprüche 19 bis 33 in innerhalb des rotierenden Bauteils (1) hierfür vorgesehene Bohrungen (2) eingepresst werden, so dass die Auswuchtgewichte (3) in den Bohrungen (2) sicher gehalten werden, wobei das Verfahren solange fortgesetzt wird, bis die Unwucht beseitigt ist.
